# EUROPEAN PATENT APPLICATION

(11) **EP 1 607 959 A2**
(43) Date of publication of application: **21.12.2005**
(21) Application number: 05104223.2
(22) Date of filing: 18.05.2005
(51) Int. Cl.: G11B 15/665, F16H 55/17, F16H 55/22

(54) **Hollow transmission component**

(30) Priority: 17.06.2004 KR 2004044873
(71) Applicant: SAMSUNG ELECTRONICS CO., LTD., Suwon-si, Gyeonggi-Do 442-742 (KR)
(72) Inventor: Kim, Jun-young 108-1904, Dongsuwon LG Village 1st, Gyeonggi-do (KR); Kim, Bong-joo 208-1001, Dongsuwon LG Village, Gyeonggi-do (KR); Cho, Young-ho 101-502, Samsung Apartment, Gyeonggi-do (KR); Baik, Chung-hum 106-1102, Dongsuwon LG Village, Gyeonggi-do (KR); Kim, Myoung-joon 2-201,Green Villa, 44-10, Gyeonggi-do (KR); Seo, Jae-kab 301-402, Dongsuwon LG Village 3rd, Gyeonggi-do (KR)
(74) Representative: Geary, Stuart Lloyd

(57) **Abstract**

Provided are a magnetic recording and/or reading apparatus and a method of manufacturing a power transmitting gear. The magnetic recording and/or reading apparatus includes a power transmitting gear. The power transmitting gear has one end coupled to a loading motor and the other end coupled to a plurality of link gears to transmit power from a loading motor to drive components during loading and unloading of a magnetic tape. The power transmitting gear includes a first gear engaged with a motor gear coupled to a shaft of the loading motor. The power transmitting gear also includes a second gear engaged with one of the plurality of link gears and a shaft member coupling the first and second gears. A space is formed inside the shaft member to prevent the shaft member from deforming during manufacture of the shaft member.

## Description

The present invention relates to a transmission component comprising first and second gear wheels axially spaced on a shaft.

Tape recording and reproducing apparatuses, such as video cassette recorders (VCRs) and camcorders are well-known. In common with other apparatuses that must record large amounts of data, a rotating head drum is used to read and write slanting tracks. The head drum is generally installed on a main chassis together with a loading motor, a capstan motor and a pair of reel assemblies on which a tape cassette is placed.

The loading motor rotates a main gear to drive several components of the magnetic recording and reproducing apparatus for loading and unloading magnetic tape. For example, the main gear may drive a pole base unit, a pinch roller unit and a brake unit.

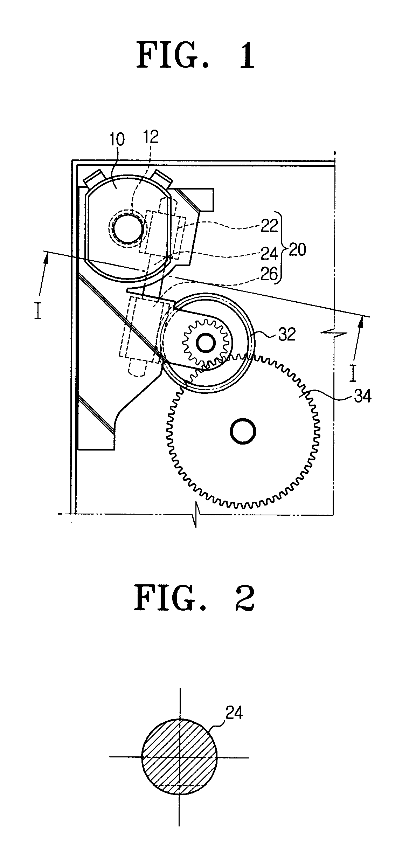

Figure 1 illustrates a loading motor and a main gear.

Referring to Figure 1, a tape recording and/or reproducing apparatus comprises a loading motor 10, a power transmitting gear 20, coupled to the loading motor 10, a relay gear 32 and a main gear 34.

The power transmitting gear 20 includes a first gear 22 engaged with a motor gear 12, coupled to the shaft of the loading motor 10. A second gear 26 engages with the relay gear 32, which is coupled to the main gear 34, and a shaft member 24 couples the first and second gears 22, 26. The first gear 22, the second gear 26 and the shaft member 24 are formed of a conventional plastic material in consideration of manufacturing convenience and cost.

Figure 2 is a cross-sectional view of the shaft member 24 of the power transmitting gear 20.

As shown in Figure 2, the shaft member 24 is a solid plastic bar. As described above, the power transmitting gear 20 is generally injection-moulded using a plastic material in consideration of manufacturing convenience and cost. However, the shaft member 24 is susceptible to deformation due to mould conditions. In other words, the shaft member 24 may distort or twist for several reasons including injection pressure, drying conditions and the like during injection-moulding.

The loading motor 10 rotates at about 1000rpm during loading and unloading of a magnetic tape. Thus, directly coupling the power transmitting gear 20 to the loading motor 10 is not normally desirable due to relatively serious twisting and swinging of the shaft member 24. As a result of such an arrangement, noise levels increase. In particular, abnormal noises are typically made during loading and unloading of the magnetic tape. In the case where the shaft member 24 is long, it is difficult to control swinging of the shaft member 24. As a result, levels of abnormal noise increase.

Accordingly, there is a need for an improved power transmitting gear and a method of manufacturing the power transmitting gear to reduce twisting, swinging and noise levels during operation.

A component, according to the present invention, is characterised in that the shaft is hollow.

Preferred and optional features of the present invention are set forth in claims 2 to 16 appended hereto.

An embodiment of the present invention will now be described, by way of example, with reference to the accompanying drawings, in which:
Figure 1 illustrates a loading motor and a main gear of a known tape recording and reproducing apparatus;
Figure 2 is a cross-sectional view of the shaft member shown in Figure 1, taken along line I-I;
Figure 3 is a schematic exploded perspective view of a magnetic recording and reproducing apparatus according to the present invention;
Figure 4 is a plan view of the main tape loading components of the apparatus in Figure 1;
Figure 5 is a front view of a power transmitting gear shown in Figure 4;
Figure 6 is a cross-sectional view of a shaft member shown in Figure 5, taken along line II-II;
Figure 7 is a cross-sectional view of a mould for manufacturing the power transmitting gear shown in Figure 4;
Figure 8 is a flowchart of a method of manufacturing a power transmitting gear according to the present invention.

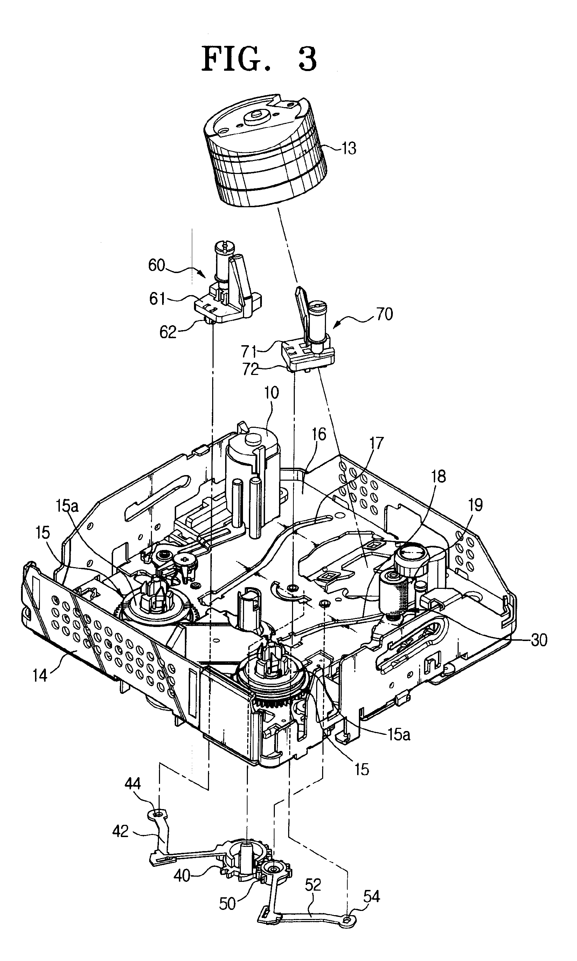

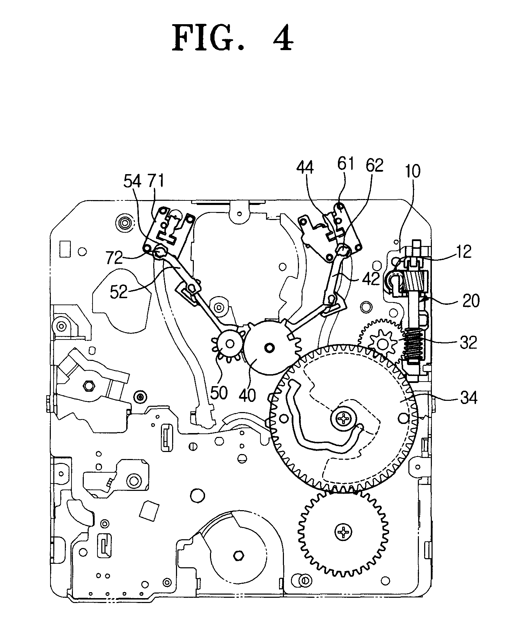

Referring to Figures 3 and 4, pole base units 60, 70 are moved by driving a main gear 34 coupled to a loading motor 10.

As shown in Figure 3, a magnetic recording and reading apparatus includes a head drum 13 installed on a main chassis 16, the loading motor 10, a capstan motor 19, a pair of reel assemblies 15 on which a tape cassette tape is placed, a pair of pole base units 60, 70, a pair of loading gears 40, 50, coupled to respective pole base units 60, 70, and a cassette holder 14. The loading motor 10 drives the main gear 34 as shown in Figure 4 to drive several components of the magnetic recording and reproducing apparatus for loading and unloading tape. The pole base units 60, 70 withdraw magnetic tape from a tape cassette (not shown) and travel along a pair of guides 17, 18 formed on the main chassis 16. Thus, the magnetic tape is brought into contact with the head drum 13. A pinch roller unit 30 presses the magnetic tape against the shaft of the capstan motor 19 during loading of the magnetic tape. A brake unit (not shown) selectively brakes rotation of reel discs 15a of the reel assemblies 15.

A power transmitting gear 20 is coupled to a motor gear 12, installed on the loading motor 10. A relay gear 32 is coupled to the power transmitting gear 20 and the main gear 34 is coupled to the relay gear 32. The pair of loading gears 40, 50 are coupled to the pair of pole base units 60, 70, which are in turn coupled to the main gear 34. Link members 42, 52 are coupled to the pair of pole base units 60, 70. As stated above, the pole base units 60, 70 are moveably coupled to ends of the loading gears 40, 50. Protruding pins 62, 72 are arranged on the base members 61, 71 of the pair of pole base units 60, 70 and coupled to slots 44, 54 formed on ends of the link members 42, 52. Thus, when the loading motor 10 is energised, drive is transmitted from the loading motor 10 to the loading gears 40, 50 via the power transmitting gear 20 to drive the pole base units 60, 70, the relay gear 32 and the main gear 34.

In other words, when the loading motor 10 is energised, the rotation of the loading motor 10 is transmitted to several components of the magnetic recording and reproducing apparatus, including the pole base units 60, 70, via the power transmitting gear 20, the main gear 34 and a plurality of other gears.

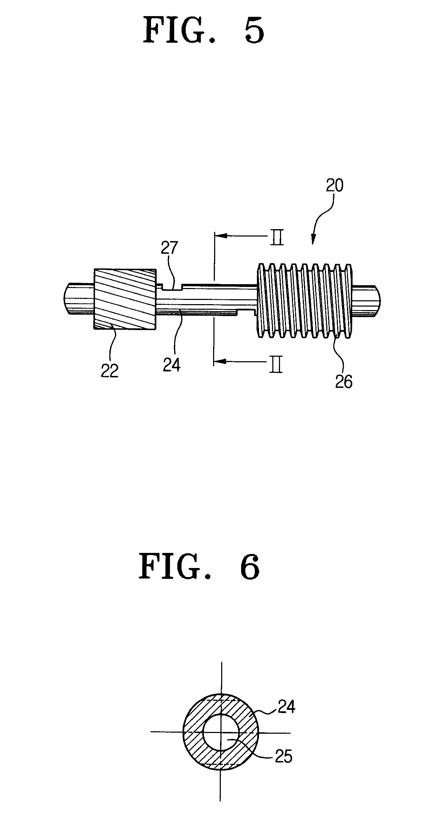

As shown in Figure 5, the power transmitting gear 20 includes a first gear 22, a second gear 26, and a shaft member 24.

The first gear 22 meshes with the motor gear 12, installed on the shaft of the loading motor 10 as shown in Figure 4. The motor gear 12 includes gear trains formed from the top to the bottom along the shaft of the loading motor 10. Since the axis of the motor gear 12 is arranged substantially orthogonal to the axis of the first gear 22, the first gear 22 is a worm gear in this example.

The second gear 26 meshes with the relay gear 32 to couple with the main gear 34 as shown in Figure 4. Since the axis of the second gear 26 is orthogonal to the axis of the relay gear 32, the second gear 26 is also a worm gear like the first gear 22 in this example. The teeth of the first gear 22 and gear trains of the second gear 26 are substantially vertical.

The shaft member 24 couples the first and second gears 22, 26 and serves as an axle for the first and second gears 22, 26. The shaft member 24 is hollow to prevent its deformation during manufacture. The space in the shaft member 24 is an axial hole 25. The axial hole 25 may be formed during injection-moulding of the power transmitting gear 20. The first gear 22, the second gear 26, and the shaft member 24 may be separately manufactured and assembled, but are preferably formed of a plastic material as a single moulded part for cost savings purposes, manufacturing convenience and assembling convenience.

A method of manufacturing the power transmitting gear 20 including the first gear 22, the second gear 26 and the shaft member 24, that are formed as the single moulded part, will now be described. In particular, a method of forming the axial hole 25 in the shaft member 24 will be described with reference to Figures 6 to 8.

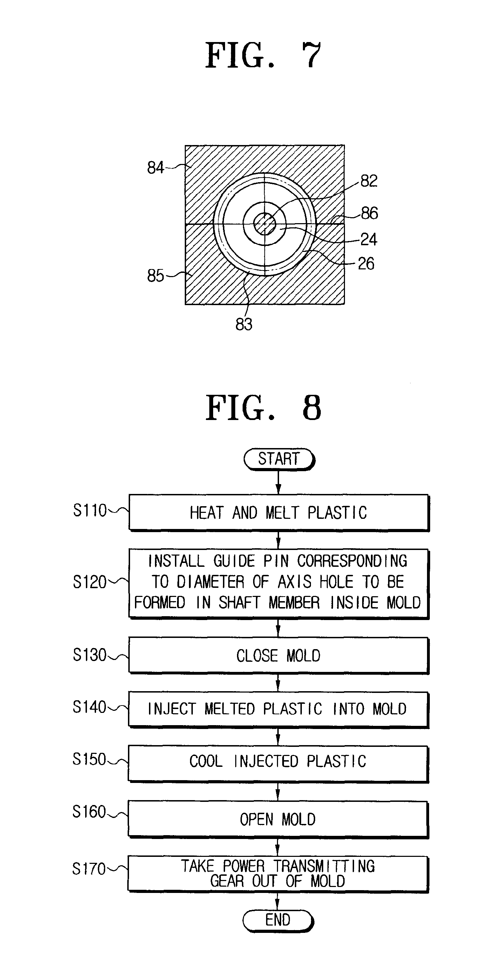

Referring to Figure 7, the mould includes a stationary mould 85, a moveable mould 84 and a moulding part 83 formed by the stationary and moveable moulds 85, 84 to have the same shape as the power transmitting gear 20 shown in Figure 5.

In step S110, pigment, a stabilizer, a plasticizer, filler, and the like are added to plastic resin material, and then the mixture is appropriately heated depending on its melting characteristics. The melted mixture is injected through an inlet into the moulding part 83 using an injector cylinder (not shown) or a piston (not shown). However, before the melted plastic mixture is injected into the moulding part 83, in step S120, a guide pin 82 with a size corresponding to a diameter of the axis hole 25 is formed in the shaft member 24. The guide pin 82 is installed inside the moulding part 83 in advance. Here, the axis of the guide pin 82 is adjusted so as to coincide with the axes of the second gear 26 and the shaft member 24. In step S130, the mould is closed after the guide pin 82 is installed inside the moulding part 83. In step S140, the melted plastic mixture is injected into the moulding part 83. In step S150, the injected plastic mixture is cooled for a predetermined period of time. In step S160, the moveable mould 84 is separated from the stationary mould 85 to open the mould, centring around a mould opening surface 86. In step S170, as shown in Figure 5, the power transmitting gear 20 is taken out of the mould as a moulded part. When the power transmitting gear 20 is manufactured using injection-moulding, the axial hole 25 of the shaft member 24 is formed in a position of the guide pin 82.

Accordingly, the axial hole 25 contributes to preventing the shaft member 24 from deforming depending on injection conditions, such as twisting or swinging. Thus, the power transmitting gear 20 can stably transmit the rotation of the loading motor 10 to a plurality of power transmitting gears, including the main gear 34 as shown in Figure 4. Therefore, the noise made during rotation of the loading motor during loading and unloading of a magnetic tape is considerably reduced.

Also, as shown in Figure 5, one or more notches 27 are formed in the outer surface of the shaft member 24 for the manufacturing convenience of the shaft member 24.

The transmission of power from the loading motor 10 will now be explained.

When the loading motor 10 is driven, the motor gear 12, installed on the shaft of the loading motor 10, rotates. The shaft member 24 rotates with the rotation of the first gear 22 of the power transmitting gear 20. The power transmitting gear 20 is engaged with the motor gear 12 and, thus, the second gear 26 coupled to the shaft member 24 also rotates. The relay gear 32 engages with the second gear 26 to rotate with the rotation of the second gear 26. Thus, the main gear 34, engaged with the relay gear 32, also rotates. Several components of the magnetic recording and reproducing apparatus, coupled to the main gear 32, operate with the rotation of the main gear 34.

In the present embodiment, one relay gear 32 couples the power transmitting gear 20 to the main gear 34. However, alternative suitable arrangements and constructions may be used. In other words, two or three link gears may be installed between the power transmitting gear 20 and the main gear 34. This may be modified depending on the design of the magnetic recording and reproducing apparatus.

As described above, in a magnetic recording and reproducing apparatus and a method of manufacturing a power transmitting gear according to embodiments of the present invention, an axis hole may be formed in a shaft member of the power transmitting gear. The power transmitting gears transmit power from a loading motor during loading and unloading of a magnetic tape. Thus, a noise made during spinning of the loading motor may be reduced. In particular, an abnormal noise may be considerably reduced.

## Claims

1. A transmission component comprising first and second gear wheels (22, 26) axially spaced on a shaft (24), **characterised in that** the shaft (24) is hollow.

2. A component according to claim 1, wherein the shaft (24) is moulded from a plastic.

3. A component according to claim 1 or 2, wherein the first gear wheel (22) is spur gear and the second gear (26) is a worm gear.

4. A component according to claim 1, 2 or 3, wherein the shaft (24) is open at one or both ends.

5. A component according to any preceding claim, wherein the shaft (24) is notched.

6. A component according to any preceding claim, wherein the first and second gear wheels (22, 26) are formed integrally with the shaft (24).

7. A tape deck including a motor (10) and a component (20) according to any one of claims 1 to 6 for transmitting drive from the motor (10) for tape loading and unloading.

8. A magnetic recording and/or reading apparatus comprising a power transmitting gear comprising one end coupled to a loading motor and the other end coupled to a plurality of link gears transmitting power of the loading motor to drive components driven during loading and unloading of a magnetic tape, wherein the power transmitting gear comprises:
a first gear engaged with a motor gear coupled to a shaft of the loading motor;
a second gear engaged with one of the plurality of link gears; and
a shaft member coupling the first and second gears, wherein a space being formed inside the shaft member to prevent the shaft member from deforming during manufacturing of the shaft member.

9. The magnetic recording and/or reading apparatus of claim 8, wherein the space is an axis hole having a predetermined radius to penetrate through the shaft member along an axial direction of the shaft member.

10. The magnetic recording and/or reading apparatus of claim 9, wherein a notch is formed in an outer surface of the shaft member.

11. The magnetic recording and/or reading apparatus of claim 9, wherein the first gear, the second gear, and the shaft member are formed as a single molded part.

12. A magnetic recording and/or reading apparatus comprising a power transmitting gear comprising one end coupled to a loading motor and the other end coupled to a plurality of link gears transmitting power of the loading motor to drive components driven during loading and unloading of a magnetic tape, wherein the power transmitting gear comprises:
a first gear engaged with a motor gear coupled to a shaft of the loading motor;
a second gear engaged with one of the plurality of link gears; and
a shaft member having a notch located on an outer surface, the shaft member coupling the first and second gears,
wherein a space being formed inside the shaft member to prevent the shaft member from deforming during manufacturing of the shaft member.

13. The magnetic recording and/or reading apparatus of claim 8, wherein the space is an axis hole having a predetermined radius to penetrate through the shaft member along an axial direction of the shaft member.

14. The magnetic recording and/or reading apparatus of claim 13, wherein the first gear, the second gear, and the shaft member are integrally connected.

15. The magnetic recording and/or reading apparatus of claim 13, wherein the first gear, the second gear, and the shaft member are formed as a single molded part.

16. A method of manufacturing a power transmitting gear of a magnetic recording and/or reading apparatus comprising a first gear engaged with a motor gear coupled to a shaft of a loading motor, a second gear engaged with one of a plurality of link gears transmitting power from the loading motor to drive components during loading and unloading of a magnetic tape, and a shaft member coupling the first and second gears and having an axis hole to prevent the shaft member from deforming, the method comprising:
installing a guide pin corresponding to a size of the axis hole of the shaft member in a molding part of a mold;
injecting melted plastic into the molding part;
cooling the injected plastic; and
opening the mold to take the molded power transmitting gear out of the mold.
